Europäisches Patentamt

European Patent Office

Office européen des brevets

(19)

(11) **EP 1 090 515 B1**

(12) **FASCICULE DE BREVET EUROPEEN**

(45) Date de publication et mention
de la délivrance du brevet:
**14.08.2002 Bulletin 2002/33**

(21) Numéro de dépôt: **99957677.0**

(22) Date de dépôt: **23.06.1999**

(51) Int Cl.7: **H04Q 7/34**

(86) Numéro de dépôt international:
**PCT/FR99/01505**

(87) Numéro de publication internationale:
**WO 00/01181 (06.01.2000 Gazette 2000/01)**

(54) **PROCEDE ET DISPOSITIF DE SELECTION DE PARAMETRES DANS UN RESEAU CELLULAIRE DE RADIOCOMMUNICATION**

VERFAHREN UND ANORDNUNG ZUM AUSWÄHLEN VON PARAMETERN IN EINEM ZELLULAREN FUNKNETZ

METHOD AND DEVICE FOR SELECTING PARAMETERS IN A CELLULAR RADIO COMMUNICATION NETWORK

(84) Etats contractants désignés:
**DE FI GB SE**

(30) Priorité: **26.06.1998 FR 9808150**

(43) Date de publication de la demande:
**11.04.2001 Bulletin 2001/15**

(73) Titulaire: **NORTEL NETWORKS SA**
**78280 Guyancourt (FR)**

(72) Inventeur: **BILLON, Thierry**
**F-92800 Puteaux (FR)**

(74) Mandataire: **Loisel, Bertrand**
**Cabinet Plasseraud,**
**84, rue d'Amsterdam**
**75440 Paris Cédex 09 (FR)**

(56) Documents cités:
**WO-A-96/31009         WO-A-97/32445**
**WO-A-98/02010         WO-A-98/10615**
**GB-A- 2 308 952**

• **ANON: "Learning about Intercell Interference Topology in a Wireless Network" IBM TECHNICAL DISCLOSURE BULLETIN, vol. 37, no. 2b, 1 février 1994 (1994-02-01), page 499 XP000433924 Armonk, NY, US**

**Description**

La présente invention concerne la gestion des ressources radio employées dans un réseau cellulaire de radiocommunication avec les mobiles.

Les réseaux cellulaires comportent des stations de base pour desservir les stations mobiles se trouvant dans les différentes cellules. Chaque station de base a une portée limitée, et se voit allouer une partie seulement des ressources radio mises à disposition de l'opérateur du réseau. Ces ressources sont réutilisées dans d'autres cellules pour optimiser la capacité de communications offerte par le réseau. De cette réutilisation résulte un risque d'interférences entre des communications distinctes partageant les mêmes ressources.

Diverses procédures de gestion des ressources radio peuvent être mises en oeuvre, selon le choix de l'opérateur, dans l'infrastructure du réseau cellulaire pour optimiser l'emploi des fréquences et minimiser les interférences. On peut citer :

- les procédures de contrôle de puissance qui limitent la puissance radio émise lorsque les conditions de propagation entre une station de base et une station mobile sont relativement bonnes ;
- les procédures d'allocation des ressources au sein de chaque cellule, qui peuvent suivre diverses stratégies de "tiering" propres à limiter les interférences ou à permettre une plus grande réutilisation de certains canaux ;
- les procédures de transfert automatique de canal au sein d'une même cellule (handover intracellulaire), qui changent les canaux alloués à des communications interférées ;
- les procédures de transfert automatique entre cellules d'une communication en cours (handover intercellulaire) procurant la continuité de communication lorsqu'un mobile se déplace en changeant de cellule ;
- les procédures de saut de fréquence qui procurent une diversité en fréquence des brouilleurs ;
- les procédures d'allocation dynamique de canaux par lesquelles les jeux de fréquences employés dans les cellules peuvent être adaptés à des conditions d'interférence ou de trafic observées ; etc.

Un bon nombre de ces procédures font appel à des paramètres qui sont comparés à des grandeurs mesurées par les stations de base ou les stations mobiles pour prendre des décisions ou déterminer une commande.

Par exemple, dans le cas du contrôle de puissance, l'atténuation appliquée est une fonction croissante du niveau de puissance capté sur la liaison radio, un paramètre de comparaison servant à caractériser cette croissance et/ou à fixer un seuil de puissance en deçà duquel aucune atténuation n'est imposée. En général, les algorithmes de handover intercellulaire utilisent également un seuil de puissance en deçà duquel ils forcent le changement de cellule de rattachement de la station mobile.

Pour optimiser l'ensemble, l'opérateur du réseau doit régler cellule par cellule les valeurs adéquates de ces paramètres de gestion, ce qui pose de nombreuses difficultés :

- les nombres de procédures appliquées et de cellules, et donc le nombre de paramètres à ajuster, peuvent être élevés, ce qui conduit souvent à adopter des valeurs par défaut peu adaptées aux caractéristiques locales du réseau ;
- le choix d'un paramètre n'est pas toujours intuitif, ce qui favorise également l'adoption de valeurs par défaut ;
- un choix empirique, même par un installateur très expérimenté, peut se révéler mal adapté en raison de la complexité des mécanismes de propagation radio ;
- la pertinence du choix d'un paramètre est souvent très sensible aux choix effectués dans des cellules voisines, ou pour d'autres paramètres de la même procédure ou de procédures différentes ;
- lors d'une modification de l'environnement radio (ajout, suppression ou panne d'une station de base ou simplement d'une unité d'émission/réception, changement durable des conditions de propagation à proximité d'une station de base, ...), le choix des paramètres devrait être révisé dans la cellule concernée voire dans un certain nombre de cellules voisines. En pratique, ceci n'est généralement pas effectué en raison de la complexité de la tâche.

Un but de la présente invention est de s'affranchir de certaines au moins des difficultés ci-dessus. Un autre but est de simplifier le choix des valeurs pour des paramètres de gestion des ressources radio employés dans l'infrastructure d'un réseau cellulaire. Un autre but est de rendre un tel choix mieux adapté aux caractéristiques locales des cellules.

L'invention propose ainsi un procédé de sélection de la valeur d'au moins un paramètre de gestion de ressources radio employé par des équipements de contrôle de stations de base d'un réseau de radiocommunication cellulaire. Pour chaque station de base desservant des stations mobiles dans une cellule, on obtient des valeurs d'au moins une grandeur d'après des mesures effectuées sur des canaux radio dans la cellule, cette grandeur étant comparée à au moins un paramètre associé dans une procédure de gestion des ressources radio allouées aux stations mobiles. Selon l'invention, on tient une statistique des valeurs obtenues de ladite grandeur, et on adapte la valeur dudit paramètre associé pour la cellule de façon que, d'après la statistique, une fraction déterminée des valeurs obtenues de ladite grandeur soient supérieures à la valeur du paramètre associé.

Par le biais des distributions statistiques des grandeurs déduites des mesures, le procédé « apprend » des caractéristiques du réseau qui peuvent être pertinentes à l'égard d'une ou plusieurs procédures de gestion des ressources radio. Définir par rapport à cette distribution des valeurs de paramètres de ces procédures, tels que des seuils de comparaison, simplifie largement la tâche de paramétrage de l'opérateur.

La définition à l'aide d'une fraction déterminée des valeurs prises en compte dans la statistique sera souvent plus intuitive que le choix direct d'une valeur absolue du paramètre.

Par exemple, dans le cas du contrôle de puissance, on sait qu'il est judicieux de ne pas imposer d'atténuation aux 10 ou 20 % de communications pour lesquelles les conditions de réception sont les moins bonnes. La grandeur faisant l'objet de la statistique pourra alors être le niveau de puissance, ou plus généralement une grandeur corrélée au rapport canal-sur-interféreurs, et on adoptera pour le contrôle de puissance un seuil correspondant aux 10 ou 20 % de valeurs les plus mauvaises de cette grandeur.

Des adaptations du même genre peuvent être faites pour des paramètres intervenant dans des procédures de handover, de choix des canaux radio alloués à des communications,...

Les grandeurs faisant l'objet de la statistique peuvent être déterminées à partir de niveaux de puissance ou de qualité mesurés, ou encore d'estimations du rapport canal-sur-interféreurs, sur les liaisons descendantes (des stations de base vers les stations mobiles) et/ou sur les liaisons montantes. La grandeur pourrait également dépendre de la distance entre la station de base et la station mobile, évaluée à partir du retard de propagation de certains signaux.

Pour améliorer la qualité de réception sur les liaisons montantes, les constructeurs d'infrastructures de réseaux cellulaires ont imaginé un certain nombre de méthodes reposant sur des techniques de diversité ou de traitement de signal. Ces techniques ne peuvent généralement pas être utilisées au niveau des stations mobiles. La présente invention permet une amélioration dans les deux sens de communication. Selon les cas, l'amélioration pourra être plus grande sur les liaisons montantes ou sur les liaisons descendantes. Compte tenu des méthodes déjà disponibles pour améliorer la réception sur les liaisons montantes, il pourra être avantageux de privilégier les liaisons descendantes dans la mise en oeuvre de la présente invention. Pour cela, les mesures utilisées pour obtenir la grandeur faisant l'objet de la statistique à partir de laquelle on détermine la valeur du paramètre seront de préférence des mesures effectuées par les stations mobiles.

Pour certaines procédures, notamment pour les procédures de handover intercellulaire, il est judicieux que la statistique des valeurs obtenues de la grandeur déduite des mesures porte sur les premières mesures obtenues sur un canal de signalisation dédié pour chaque station mobile accédant spontanément à la cellule. Ceci permet à la statistique de refléter fidèlement la couverture radio de la cellule, en évitant la prise en compte des mesures relatives à des stations mobiles dont l'accès à la cellule, ou la persistance dans la cellule, ne serait pas spontané mais résulterait d'une procédure artificielle de handover ou autre.

Un autre aspect de la présente invention se rapporte à un équipement de contrôle d'au moins une station de base d'un réseau cellulaire de radiocommunication, comprenant des moyens d'exécution de procédures de gestion de ressources radio allouées à des communications entre la station de base et des stations mobiles dans une cellule desservie par cette station de base, et des moyens de sélection, conformément à un procédé de sélection tel que défini ci-dessus, de la valeur d'au moins un paramètre utilisé dans au moins une de ces procédures.

D'autres particularités et avantages de la présente invention apparaîtront dans la description ci-après d'exemples de réalisation non limitatifs, en référence aux dessins annexés, dans lesquels :

- la figure 1 est une représentation schématique du système d'accès d'un réseau radio cellulaire ;
- la figure 2 est un graphique donnant un exemple de fonction de répartition d'un niveau de puissance mesuré, et illustrant son exploitation dans des procédures de contrôle de puissance et de handover ;
- la figure 3 est une représentation schématique d'une cellule dans laquelle est appliquée une procédure particulière de choix des canaux radio alloués ;
- la figure 4 est un graphique semblable à celui de la figure 2, illustrant la détermination de seuils utilisés dans la procédure appliquée dans la cellule de la figure 3 ;
- la figure 5 est un schéma illustrant une autre procédure de choix d'allocation des canaux ; et
- les figures 6 et 7 sont des graphiques montrant l'amélioration de la réception sur les liaisons montante et descendante, qu'on obtient en appliquant l'invention à une procédure de choix des canaux radio alloués.

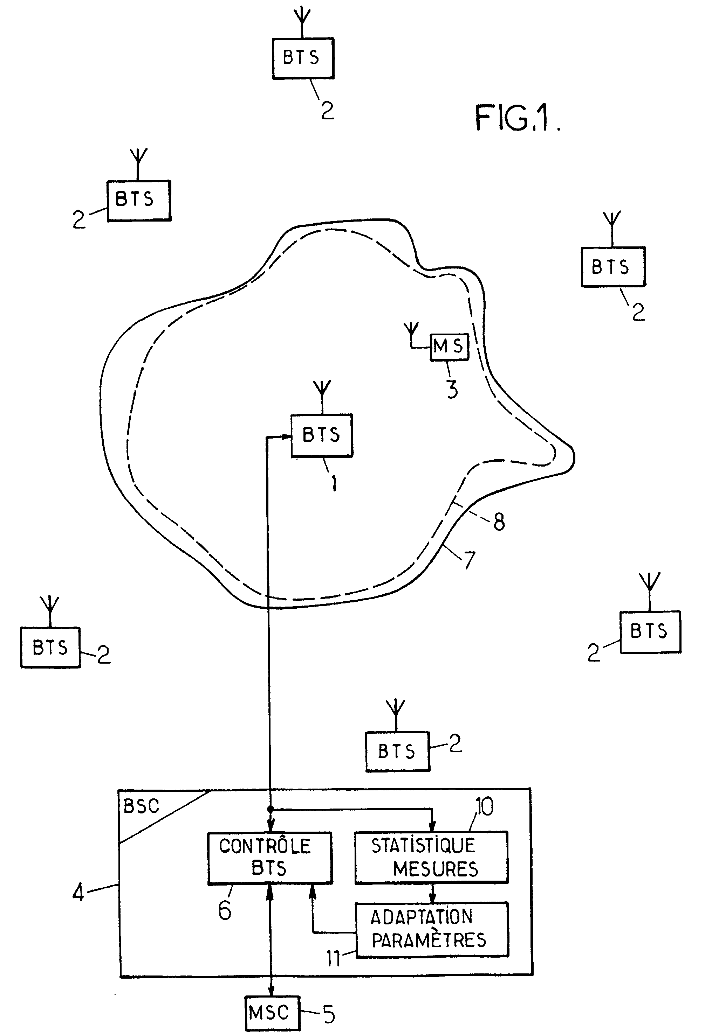

L'infrastructure d'un réseau cellulaire tel que celui représenté sur la figure 1 comprend des stations de base (BTS) 1,2 distribuées sur la zone géographique de couverture du réseau. Les stations de base procurent des liaisons radio avec des stations mobiles (MS) 3 qui se trouvent à leur portée. Elles sont par ailleurs reliées à un système d'accès comprenant des contrôleurs de station de base (BSC) 4 et des centres de commutation du service mobile (MSC) 5 qui assurent l'interface avec les réseaux fixes. Chaque BTS 1 dépend d'un BSC 4, mais chaque BSC peut superviser plusieurs BTS. Pour chaque BTS 1 qu'il supervise, le BSC 4 comprend un module logiciel de contrôle 6 qui exécute un certain nombre de procédures de gestion des ressources radio pour la cellule desservie par cette BTS.

Le procédé selon l'invention est décrit ci-après en relation avec la station de base 1. On comprendra qu'il peut être mis en oeuvre de façon semblable pour chacune des autres stations de base 2. A titre schématique, le contour 7 représenté sur la figure 1 désigne la limite de la cellule desservie par la BTS 1. Au-delà de cette limite, c'est une BTS voisine 2 qui dessert les stations mobiles.

Les stations mobiles 3 actives dans la cellule effectuent périodiquement des mesures sur des signaux radio émis par la BTS 1 sur des canaux descendants. Ces mesures sont effectuées sur une fréquence de balise affectée à la cellule lorsque le mobile n'est pas en communication, ou sur des canaux de trafic ou de signalisation. En outre, lorsqu'une station mobile communique avec la BTS, cette dernière effectue des mesures sur les signaux qu'elle reçoit.

Dans le cas particulier des réseaux GSM, qui sera considéré ci-après à titre d'exemple, les mesures effectuées sont décrites dans la Recommandation GSM 05.08 publiée par l'ETSI (European Telecommunications Standard Institute), à laquelle on pourra se référer. Ces mesures comprennent :

- le niveau de puissance capté par le mobile 3 sur la voie descendante, moyenné par périodes de 480 ms et codé sur 6 bits par une quantité RXLEV_DL. Les valeurs de RXLEV_DL croissent d'une unité par décibel avec la puissance mesurée P (RXLEV_DL = 0 si P < -103 dBm, RXLEV_DL = 1 si -103 $\leq$ P < -102 dBm, ..., RXLEV_DL = 63 si P $\geq$ -41 dBm) ;
- le niveau de qualité de la liaison descendante, codé sur 3 bits par une quantité RXQUAL_DL calculée à partir d'estimations du taux d'erreurs binaires (BER) observé sur la liaison descendante à l'aide de l'égaliseur de canal ou du décodeur convolutif du mobile 3 (RXQUAL_DL=0 si BER<0,2%, RXQUAL_DL=1 si 0,2% < BER < 0,4%, RXQUAL_DL=2 si 0,4% < BER < 0,8%, RXQUAL_DL=3 si 0,8% < BER < 1/6%, RXQUAL_DL=4 si 1,6% < BER < 3,2%, RXQUAL_DL=5 si 3,2% < BER < 6,4%, RXQUAL_DL=6 si 6,4% < BER < 12,8%, RXQUAL_DL=7 si BER > 12,8%) ;
- les niveaux de puissance et de qualité mesurés par la BTS 1 sur la liaison montante, et codés par deux quantités RXLEV_UL et RXQUAL_UL définies de la même manière que les quantités correspondantes RXLEV_DL et RXQUAL_DL pour la liaison descendante ;
- des niveaux de puissance que les stations mobiles 3 captent depuis d'autres BTS 2 sur les fréquences de balise affectées aux cellules voisines. Chacun de ces niveaux est codé sur six bits par une quantité RXLEV_NCELL(n) de la même manière que pour la quantité RXLEV_DL ;
- une distance (au sens de la propagation radio) entre la BTS et la station mobile, que la BTS 1 évalue à partir du retard de réception du signal radio renvoyé par le mobile 3 par rapport à l'émission du signal par la BTS.

Les mesures effectuées par la station mobile 3 sont transmises sur l'interface radio dans un message appelé MEASUREMENT_REPORT. La BTS 1 retransmet ces mesures au BSC 4 dans un message appelé MEASUREMENT_RESULT, en y adjoignant les mesures qu'elle a elle-même réalisées. L'ensemble de ces mesures est exploité par le BSC 4 dans le cadre des procédures de gestion des ressources radio employées dans la cellule.

Selon l'invention, une partie au moins de ces mesures est en outre fournie à un module de calcul statistique 10 qui analyse les fréquences d'occurrence des différentes valeurs possibles d'une ou plusieurs grandeurs qui en dépendent.

Dans l'exemple d'architecture représenté sur la figure 1, le module de calcul statistique 10 est situé au niveau du BSC 4, et il intercepte les messages MEASUREMENT_RESULT transmis sur l'interface (A-bis) entre la BTS 1 et le BSC 4. Le BSC comprend un autre module 11 qui réalise l'adaptation de différents paramètres utilisés par le module 6 supervisant la BTS 1, à l'aide des statistiques tenues par le module 10. Dans une autre réalisation, les modules 10 et/ou 11 pourraient être situés au niveau des stations de base.

Les systèmes GSM combinent l'accès multiple à répartition en fréquence (FDMA) et l'accès multiple à répartition dans le temps (TDMA). L'un des intervalles de temps de chaque trame sur la fréquence de balise de chaque station de base est utilisé pour former un canal de contrôle (BCCH). Les autres intervalles de temps sont allouables en tant que canaux de trafic. La BTS dispose généralement d'autres fréquences pour former des canaux de trafic. Pour accéder au réseau, un mobile actif dans la cellule émet une requête d'accès sur un canal d'accès aléatoire RACH associé au BCCH, après quoi la station de base lui alloue un canal de signalisation bidirectionnel dédié (SDCCH) sur lequel sont échangés divers éléments de signalisation.

Les mesures énoncées ci-dessus sont effectuées par les stations de base 1 et les stations mobiles 3 dès l'allocation d'un canal de signalisation dédié. Il est avantageux que les mesures sur la base desquelles le module 10 fait les calculs statistiques se limitent aux premières mesures obtenues sur le canal SDCCH pour chaque station mobile ayant accédé spontanément à la cellule. Ceci procure un nombre limité d'échantillons de mesures, mais ceux-ci représentent bien la couverture radio effective dans la cellule. Ceci évite en effet que les statistiques soient influencées par les effets des algorithmes de handover mis en oeuvre dans la cellule ou dans les cellules voisines.

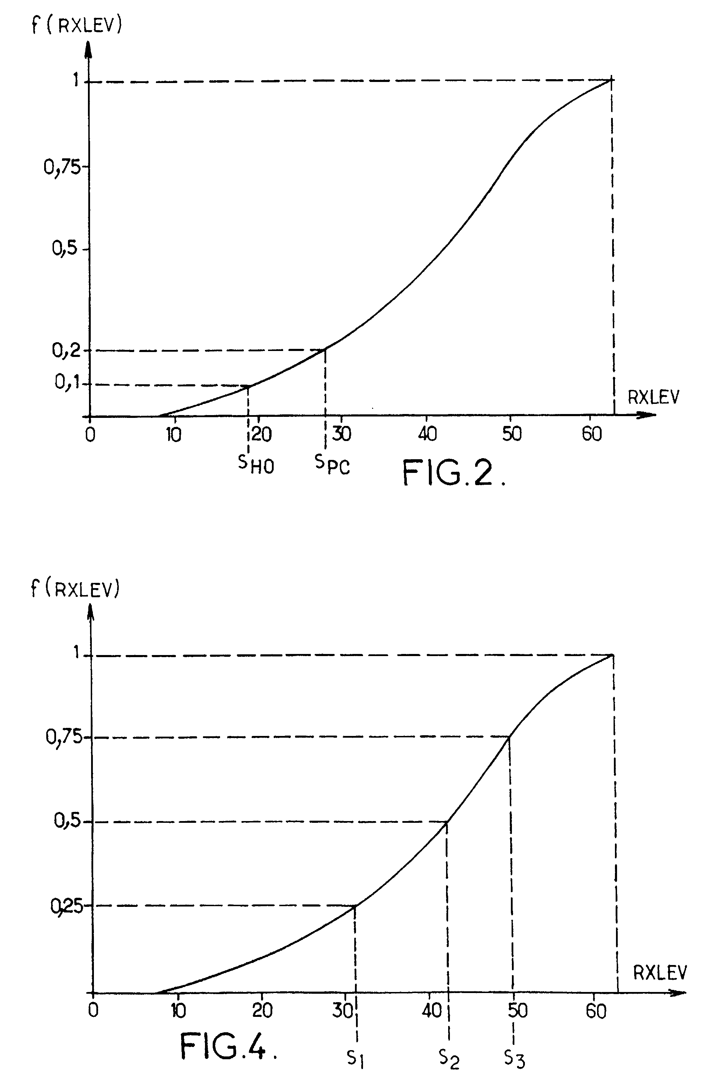

Le module 10 calcule la fonction de répartition d'une ou plusieurs grandeurs obtenues à partir des résultats des mesures. La courbe des figures 2 et 4 montre un exemple de fonction de répartition ainsi calculée, dans le cas où la grandeur en question est la quantité RXLEV représentant un niveau de puissance capté (RXLEV_UL, RXLEV_DL ou une combinaison des deux). La valeur f(RXLEV) de la fonction de répartition, pour une certaine valeur RXLEV, représente la probabilité d'observation d'une valeur au plus égale à RXLEV parmi les valeurs déduites des mesures effectivement réalisées. La courbe dérivée représente la densité de probabilité de la grandeur.

Pour obtenir une fonction de répartition telle que celle représentée sur les figures 2 et 4, on effectue un simple décompte des valeurs découlant des mesures.

Le module 10 tient par exemple un compteur $N(x)$ pour chaque valeur possible $x$ de la grandeur analysée. Lorsqu'un échantillon de mesure donne une valeur $y$, il incrémente d'une unité les compteurs $N(x)$ avec $x \geq y$. La fonction de répartition est donnée par $f(x) = N(x) / N(x_{max})$, où $x_{max}$ est la plus grande valeur possible de $x$. Quand $N(x_{max})$ atteint une certaine valeur de débordement, le module 10 divise tous les compteurs $N(x)$ par un facteur de renormalisation. La valeur de débordement et le facteur de renormalisation sont choisis en fonction de la période dont on souhaite la prise en compte dans la statistique.

Le module 10 pourrait aussi calculer la densité de probabilité avec des compteurs d'occurrence de chaque valeur, et en déduire la fonction de répartition.

Des courbes du type représenté sur les figures 2 et 4 sont exploitées par le module 11, pour déterminer de manière adaptative des seuils utilisés dans certaines procédures de gestion des ressources radio.

Par exemple, le module de contrôle 6 du BSC peut mettre en oeuvre, pour les communications impliquant sa BTS 1, un algorithme de contrôle de puissance utilisant la formule récursive suivante pour déterminer l'atténuation devant être appliquée dans des fenêtres temporelles successives :

$$\text{TXPWR}_n = \max\left\{0, k \times \left(\text{RXLEVAV}_{n-1} + \text{TXPWR}_{n-1} - \text{S}_{PC}\right)\right\} \qquad (1)$$

dans laquelle :

$\text{TXPWR}_n$ est le facteur d'atténuation, exprimé en dB par rapport à la puissance maximale, utilisé sur la liaison montante et/ou sur la liaison descendante lors de la n-ième fenêtre temporelle ;
$k$ est un facteur de compensation compris entre 0 (aucun contrôle de puissance) et 1 ;
$\text{RXLEVAV}_{n-1}$ est la valeur d'un niveau de puissance RXLEV moyenné sur la (n-1)-ième fenêtre temporelle, exprimée en dBm ou en unités de RXLEV ;
$\text{S}_{PC}$ est un seuil exprimé en mêmes unités que la quantité $\text{RXLEVAV}_{n-1}$ ;

Dans l'expression (1), $\text{RXLEV}_0 = \text{RXLEVAV}_{n-1} + \text{TXPWR}_{n-1}$ représente le niveau de champ qui aurait été reçu en l'absence de contrôle de puissance. A chaque itération de l'algorithme, c'est-à-dire après chaque fenêtre de moyennage, l'atténuation est recalculée. Dans des conditions stables, le facteur d'atténuation est égal à $k \times (\text{RXLEV}_0 - \text{S}_{PC})$ si $\text{RXLEV}_0 \geq \text{S}_{PC}$, et à 0 dB si $\text{RXLEV}_0 \leq \text{S}_{PC}$. Ce calcul peut être effectué séparément pour la liaison montante (moyenne de RXLEV_UL) et pour la liaison descendante (moyenne de RXLEV_DL).

On sait, empiriquement, que cet algorithme de contrôle de puissance est optimal lorsqu'environ 20 % seulement des communications sont à puissance maximale, c'est-à-dire lorsque les 80 % de communications les meilleurs font l'objet d'une limitation de puissance forcée par l'algorithme (TXPWR > 0 dB). En général, la puissance maximale est requise pour les communications avec les mobiles les plus éloignés de la station de base, pour lesquels le champ reçu est le plus faible (les mobiles se trouvant entre les contours 7 et 8 dans la représentation schématique de la figure 1). Il s'agit à peu près des 20 % de cas les pires dans la statistique de couverture radioélectrique de la cellule.

On peut donc définir le seuil $\text{S}_{PC}$ de l'expression (1) à partir de la fonction de répartition f(RXLEV), comme indiqué sur la figure 2. Il s'agit de la valeur pour laquelle la fonction de répartition vaut 0,2 ($\text{S}_{PC}$ = 28 dans l'exemple de la figure 2, soit une puissance de -75 dBm). Dans la pratique, le seuil $\text{S}_{PC}$ pourra en général être choisi dans la plage 10 % $\leq f(\text{S}_{PC}) \leq$ 20 %.

Les algorithmes de handover exécutés par les BSC utilisent un certain nombre de seuils adaptables de façon semblable.

Par exemple, un niveau de champ trop bas est généralement une cause de handover. Si le paramètre RXLEV_DL ou RXLEV_UL mesuré en cours de communication tombe en dessous d'un seuil $\text{S}_{HO}$, la BTS commande à la station mobile de changer de cellule, généralement pour se connecter à la cellule voisine pour laquelle le niveau de puissance capté RXLEV_NCELL(n) est le plus élevé.

Il est judicieux que le seuil $S_{HO}$ soit plus petit que le seuil $S_{PC}$, pour éviter de forcer des handovers pour cause de puissance insuffisante dans le cas de mobiles qui ne fonctionneraient pas à puissance maximale. Dans l'exemple de la figure 2, le seuil $S_{HO}$ est choisi par le module 11 comme correspondant à la valeur RXLEV telle que f(RXLEV) = 10 % ($S_{HO}$ = 19, soit une puissance de -84 dBm).

Les choix des paramètres $S_{PC}$,$S_{HO}$,... sont modifiés automatiquement par les modules 10 et 11 lorsque se produisent diverses modifications de l'environnement radio, y compris en cas d'ajout d'une nouvelle station de base aux alentours. L'adaptation produit les nouvelles valeurs après convergence de la statistique.

Les statistiques effectuées par le module 10 peuvent également être exploitées dans le cadre de procédures de choix des canaux à allouer à des communications en cours d'établissement.

A titre d'exemple, certains opérateurs adoptent des stratégies de type "cellules concentriques", selon lesquelles les fréquences FDMA sont allouées aux communications de manière dépendante du niveau de signal.

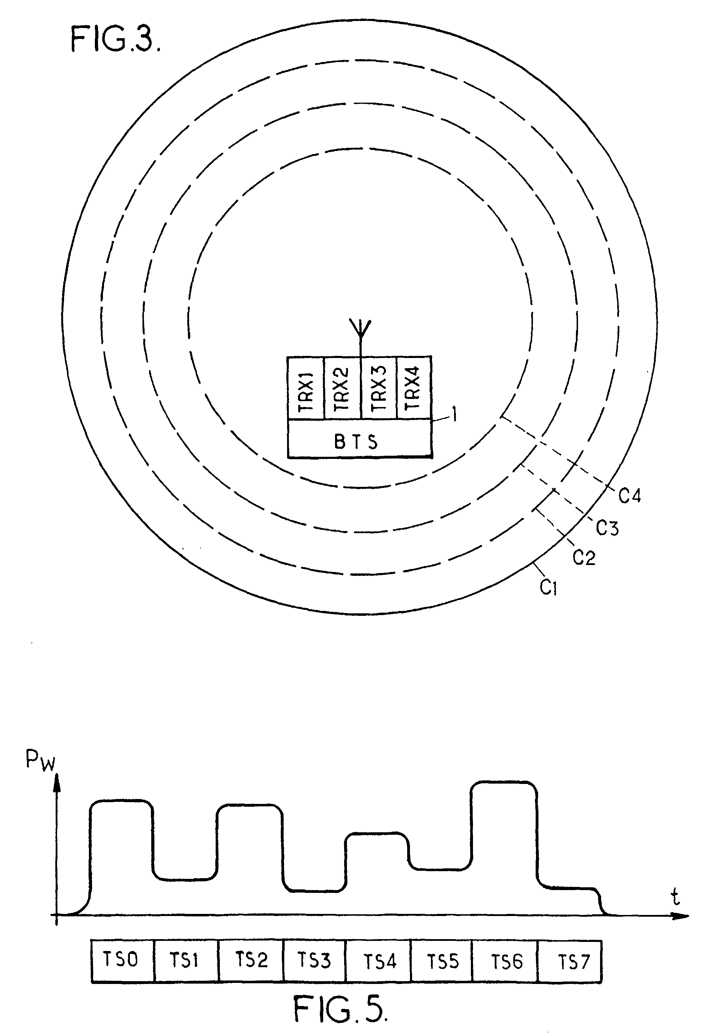

La figure 3 en donne une illustration dans un cas particulier. Dans cet exemple schématique, la BTS 1 comporte M=4 unités d'émission/réception TRX1-TRX4 respectivement associées à des fréquences porteuses différentes. L'unité TRX1 est associée à la fréquence de balise, et fonctionne à puissance maximale sans saut de fréquence pour assurer la couverture souhaitée. Les autres unités TRX2-TRX4 sont utilisées pour des canaux de trafic, et il leur est attribué un numéro de fréquence (ARFCN en terminologie GSM) s'il n'y a pas de saut de fréquence, ou un numéro d'identification d'une séquence de saut (MAIO) dans le cas contraire.

L'unité TRX4 a vocation à émettre à la puissance la plus faible, c'est-à-dire préférentiellement pour des mobiles se trouvant dans la zone délimitée schématiquement par le cercle C4 sur la figure 3. L'unité TRX3 émet préférentiellement à puissance un peu plus élevée, a priori pour des mobiles se trouvant dans la zone délimitée schématiquement par les cercles C4 et C3. L'unité TRX2 émet préférentiellement à puissance encore plus élevée, a priori pour des stations mobiles se trouvant dans la zone délimitée schématiquement par les cercles C3 et C2. L'unité TRX1 fonctionnant sur la fréquence de balise à puissance maximale sert a priori pour les plus « mauvais » mobiles (entre les cercles C2 et C1). Dans la pratique, il va de soi que les zones préférentielles de desserte des unités TRXm ne sont pas circulaires.

Ce genre de stratégie d'allocation permet d'optimiser la réutilisation des fréquences, en adoptant un motif de réutilisation d'autant plus petit pour une fréquence donnée que la puissance d'émission sur cette fréquence est faible.

Pour décider d'allouer à une station mobile une fréquence de communication donnée, ou une unité d'émission/réception donnée TRXm, une possibilité est de comparer le niveau de puissance RXLEV capté par le mobile depuis la station de base (ou par la station de base depuis le mobile, ou une combinaison des deux) à des seuils de décision $S_1$,$S_2$,$S_3$ définis par le module 11 à partir de la fonction de répartition déterminée par le module de calcul 10.

La figure 4 illustre cette détermination des seuils $S_1$,$S_2$,$S_3$, qui correspondent respectivement aux valeurs 25%, 50% et 75% de la fonction de répartition ($S_1$ = 31, $S_2$ = 42 et $S_3$ = 50 dans l'exemple représenté, soit respectivement -72 dBm, -61 dBm et -53 dBm). Pour chaque mobile auquel un canal est à allouer, si RXLEV < $S_1$ (25% de cas les pires), la fréquence de balise (unité TRX1) sera retenue pour que la puissance soit maximale s'il reste un intervalle de temps disponible sur cette fréquence. Si tous les intervalles de temps sont occupés pour l'unité TRX1, l'algorithme recherche si un intervalle de temps est disponible sur l'unité TRX2, puis sur l'unité TRX3 et ainsi de suite. Si $S_1 \le$ RXLEV < $S_2$, la fréquence de l'unité TRX2 sera allouée préférentiellement. Si $S_2 \le$ RXLEV<$S_3$, la fréquence de l'unité TRX3 sera allouée préférentiellement. Et si RXLEV $\ge S_3$ (25% de cas les meilleurs), la fréquence d'unité TRX4 sera allouée préférentiellement.

Dans le cas général d'une BTS à M unités d'émission/réception, chaque seuil $S_m$ ($1 \le m \le$ M-1) est défini à partir d'une fraction de la forme $100 \times$m/M % dans la procédure ci-dessus, soit f($S_m$) = $100 \times$m/M %.

En cas de défaillance d'une unité TRXm, les seuils pertinents $S_m$ sont aisément modifiés. Il suffit de diminuer d'une unité le nombre M pour qu'après convergence de la statistique, le module 11 sélectionne les nouvelles valeurs adéquates.

Cette stratégie de choix du canal de communication peut avoir de très nombreuses variantes.

Dans l'une d'elles, deux motifs de réutilisation seulement sont utilisés : l'un pour les fréquences de balise et l'autre, de plus petite taille, pour les autres fréquences. En d'autres termes, seul le seuil $S_1$ (avec f($S_1$) = 100/M %) est utilisé pour décider si un mobile communiquera sur la fréquence de balise (unité TRX1) ou sur une autre fréquence dans chaque cellule (unité TRXm, avec $2 \le$ m $\le$ M) .

Comme la précédente, cette procédure de choix des fréquences à allouer a l'avantage de confiner préférentiellement les émissions les plus énergétiques sur les fréquences les moins réutilisées.

Une telle procédure peut bien entendu être appliquée indépendamment des unités TRXm, en tenant simplement compte de la fréquence à allouer.

D'autre part, la stratégie de choix des canaux alloués peut également porter sur les intervalles de temps TDMA et non seulement sur les fréquences FDMA.

La figure 5 en donne une illustration. Sa partie inférieure montre la division en huit intervalles de temps TS0-TS7 de la trame TDMA sur une fréquence porteuse donnée, et sa partie supérieure montre schématiquement l'allure souhaitée de la puissance transmise PW sur ces intervalles de temps.

Dans cet exemple, la procédure d'allocation de l'intervalle de temps TSi s'efforce d'allouer les intervalles de temps de rang i pair aux communications relativement énergétiques (mobile éloigné de la station de base) et les intervalles de temps de rang i impair aux communications les moins énergétiques (mobile proche). Ce genre de stratégie d'allocation, mise en oeuvre dans un ensemble de cellules voisines, permet de réduire le niveau moyen d'interférence co-canal. Si les stations de base sont synchronisées, on peut permuter le rôle des intervalles de temps pairs et impairs pour une cellule voisine réutilisant la même fréquence, ce qui évite des interférences entre les communications les plus énergétiques dans les deux cellules. Dans le cas de réseaux asynchrones, la procédure réduit le niveau moyen d'interférence co-canal en limitant la durée moyenne d'émission à forte puissance.

Pour mettre en oeuvre une telle procédure d'allocation d'intervalles de temps, le niveau de puissance capté par un mobile depuis la BTS ou par la BTS depuis le mobile (ou une combinaison des deux) est comparé à un seuil $S_{TS}$ permettant de décider l'allocation préférentielle (selon les disponibilités) sur un intervalle de temps de rang pair ou impair. Ce seuil $S_{TS}$ est avantageusement défini à l'aide de la fonction de répartition de la grandeur mesurée associée ($f(S_{TS})$ = 50 % dans l'exemple considéré).

On note que les statistiques tenues par le module de calcul 10 pour chaque cellule peuvent être globales à l'égard de la cellule, ou différenciées suivant différentes sous-unités ou différents sous-ensembles de ressources utilisés dans la cellule.

Par exemple, dans le cas de la BTS 1 représentée sur la figure 3, le module peut tenir d'une part une statistique globale pour la cellule desservie, et d'autre part M statistiques semblables respectivement établies à partir des mesures faites relativement aux mobiles affectés aux différentes unités d'émission-réception TRX1-TRX4. La statistique globale sert à définir les seuils de choix de fréquence S1-S3 de la manière écrite en référence à la figure 4, tandis que les M statistiques relatives aux unités d'émission-réception peuvent être utilisées pour sélectionner le seuil $S_{TS}$ auquel fait appel la procédure d'allocation d'intervalles de temps décrite en référence à la figure 5.

Dans les exemples qui précèdent, la grandeur faisant l'objet de la statistique tenue par le module 10 est déduite de mesures de niveau de champ RXLEV effectuées par les stations mobiles ou les stations de base. Il est possible de déduire ces grandeurs des autres mesures dont rend compte le message MEASUREMENT_RESULT (RXQUAL, DISTANCE,...). La grandeur en question peut encore être une combinaison d'une ou plusieurs de ces différentes mesures faites dans un ou plusieurs sens de communication. Son choix précis dépend de ce qui a été jugé adéquat pour l'optimisation de la procédure dont les paramètres sont adaptés conformément à l'invention.

Par ailleurs, la même procédure de gestion des ressources radio peut faire appel à des statistiques de grandeurs différentes tenues par le module 10. Par exemple, certains algorithmes de handover intracellulaires prévoient que si une communication présente un RXLEV relativement élevé et simultanément un RXQUAL relativement bas (bonne propagation mais présence probable d'un interféreur sur le même canal), le canal alloué à cette communication soit modifié. On peut envisager de définir les seuils correspondants sur RXLEV et sur RXQUAL à l'aide des fonctions de répartition de ces grandeurs calculées par le module 10.

Une grandeur intéressante à utiliser dans un certain nombre de procédures de gestion des ressources radio est le rapport canal-sur-interféreurs. Si on dispose de ce rapport, on peut avantageusement en tenir la statistique et l'exploiter à la place des quantités RXLEV dans chacune des procédures précédemment décrites.

Le rapport canal-sur-interféreurs n'est pas directement mesurable, ou très difficilement. Dans le sens montant, la station de base peut l'évaluer par diverses techniques connues d'analyse du signal radio qu'elle reçoit. Dans le sens descendant, une méthode d'évaluation, reposant sur une comparaison entre le niveau de réception par la station mobile d'un signal émis par la station de base et les niveaux de réception, par la même station mobile, de signaux émis sur des fréquences de balise par les stations de base d'un ensemble de cellules voisines, a été proposée dans la demande de brevet français 97 11467.

Selon cette méthode, le rapport canal-sur-interféreurs CIR dans le sens descendant est évalué par le rapport entre le niveau de puissance capté sur la liaison descendante, représenté par RXLEV_DL, et la somme des niveaux de puissance mesurés en provenance de cellules voisines, représentés par les RXLEV_NCELL(n). La mesure RXLEV_DL doit être corrigée le cas échéant pour tenir compte du contrôle de puissance. Dans le cas présent, comme la statistique porte sur les premières mesures collectées sur le canal SDCCH pour lequel aucun contrôle de puissance n'est appliqué, cette correction n'est pas utile.

L'évaluation du rapport canal-sur-interféreurs CIR peut être effectuée par le module 10 sur la base des mesures reçues dans le message MEASUREMENT_RESULT, qui contient au plus six mesures RXLEV_NCELL(n) concernant les six fréquences de balise reçues avec le plus d'énergie par le mobile en provenance de cellules voisines, parmi une liste de fréquences à surveiller que la BTS 1 signale aux mobiles sur le canal BCCH :

$$CIR = \frac{P\_DL}{\sum\limits_{n=1}^{6} g(n) \times P\_NCELL(n)} \tag{2}$$

où les puissances sont données par $P\_DL = 10^{RXLEV\_DL/10}$ et $P\_NCELL(n) = 10^{RXLEV\_NCELL(n)/10}$, et g(n) désigne un coefficient pondérateur dépendant des couleurs des cellules voisines dans le motif de réutilisation des canaux de trafic. Si la cellule voisine n est de même couleur que la cellule de desserte du mobile, alors g(n)=1. Sinon, le coefficient g (n) tient compte de la protection des canaux adjacents qui est d'au moins 18 dB en GSM, soit g(n) = 0,016.

Cette estimation CIR est caractéristique de la position radioélectrique du mobile et représente le comportement réel du réseau quand il est chargé. L'estimation CIR est d'autant plus fiable que le motif de réutilisation est petit et que la charge est importante. Pour en tenir compte, on peut faire en sorte que le module 10 n'évalue la statistique de la quantité CIR que dans les circonstances où le réseau est localement chargé, par exemple aux heures de pointe.

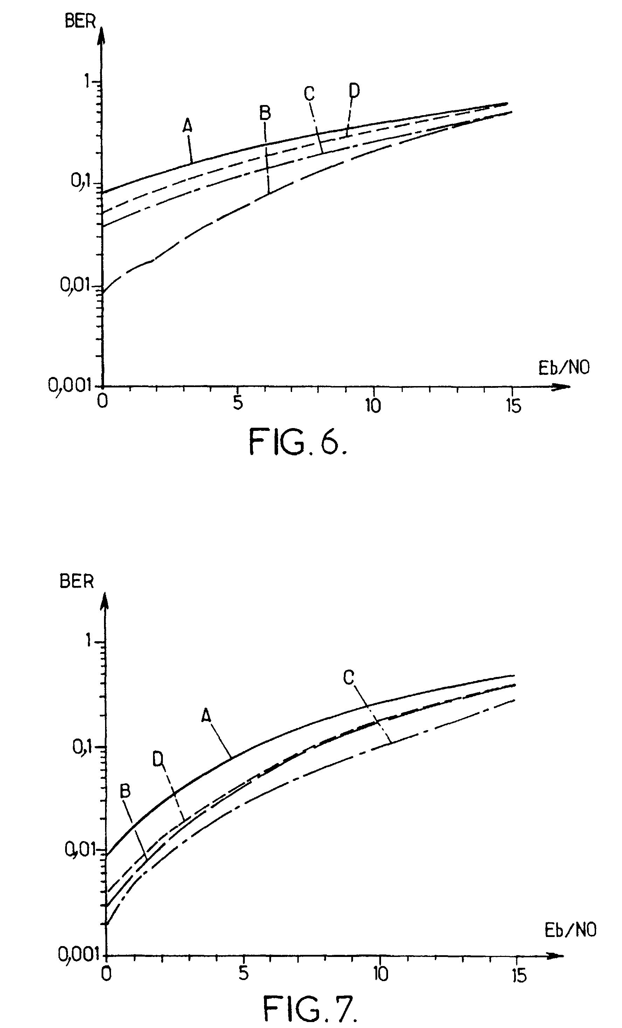

Les graphiques des figures 6 et 7 montrent des résultats de simulations réalisées pour apprécier le gain que procure le procédé selon l'invention. Dans l'exemple simulé, le réseau cellulaire de type GSM utilisait des stations de base à antennes omnidirectionnelles sans contrôle de puissance, avec une charge de trafic de 70 %, et un motif de réutilisation de 3 cellules pour les canaux de trafic et de 12 cellules pour les canaux BCCH (quatre porteuses par cellule). Les courbes de référence A correspondent au cas où les porteuses sont allouées au hasard, l'invention n'étant pas mise en oeuvre. Pour les autres courbes B,C,D, l'allocation des canaux fréquentiels était telle que les 25 % des communications pour lesquelles les conditions étaient les plus mauvaises étaient effectuées préférentiellement sur la fréquence BCCH (réutilisée dans un motif à 12), les autres se voyant allouer un canal au hasard sur une autre porteuse (réutilisée dans un motif à 3). Les courbes montrent la dépendance entre le rapport Eb/NO (énergie par bit sur puissance du bruit) et le taux d'erreurs binaires BER, sur la liaison montante pour la figure 6 et sur la liaison descendante pour la figure 7.

Les courbes B correspondent au cas où la grandeur utilisée pour décider de la fréquence à allouer, et dont la statistique sert à définir le seuil correspondant $S_1$, est le niveau de puissance RXLEV_UL. Pour les courbes C, cette grandeur est le rapport signal-sur-interféreurs CIR évalué sur la liaison descendante selon la formule (2). Et pour les courbes D, c'est la distance évaluée par la BTS à partir du retard de réception du signal montant par rapport au signal descendant. On note les gains importants que procure la mise en oeuvre de l'invention. Ces gains ne sont pas identiques dans les deux sens de communication et selon les grandeurs utilisées, ce qui permet des stratégies d'optimisation différentes selon les particularités du réseau.

## Revendications

1. Procédé de sélection de la valeur d'au moins un paramètre de gestion de ressources radio ($S_{PC}, S_{HO}, S_1, S_2, S_3, S_{TS}$) employé par des équipements (4) de contrôle de stations de base d'un réseau de radiocommunication cellulaire, dans lequel, pour chaque station de base (1) desservant des stations mobiles (3) dans une cellule, on obtient des valeurs d'au moins une grandeur (RXLEV, RXQUAL, DISTANCE, CIR) d'après des mesures effectuées sur des canaux radio dans la cellule, ladite grandeur étant comparée à au moins un paramètre associé dans une procédure de gestion des ressources radio allouées aux stations mobiles, **caractérisé en ce qu'**on tient une statistique des valeurs obtenues de ladite grandeur, et **en ce qu'**on adapte la valeur dudit paramètre associé pour la cellule de façon que, d'après la statistique, une fraction déterminée des valeurs obtenues de ladite grandeur soient supérieures à la valeur du paramètre associé.

2. Procédé selon la revendication 1, dans lequel lesdites mesures sur des canaux radio dans la cellule comprennent des mesures du niveau de réception (RXLEV) de signaux radio transmis dans au moins un sens entre la station de base (1) et des stations mobiles (3).

3. Procédé selon l'une quelconque des revendications précédentes, dans lequel lesdites mesures effectuées sur des canaux radio dans la cellule comprennent des mesures de qualité (RXQUAL) de réception de signaux radio transmis dans au moins un sens entre la station de base (1) et des stations mobiles (3).

4. Procédé selon l'une quelconque des revendications précédentes, dans lequel l'obtention de ladite grandeur comporte une estimation d'un rapport canal-sur-interféreurs (CIR) au niveau de la station de base (1) ou de chaque station mobile (3).

**5.** Procédé selon l'une quelconque des revendications précédentes, dans lequel lesdites mesures sont effectuées par les stations mobiles (3).

**6.** Procédé selon les revendications 4 et 5, dans lequel l'estimation d'un rapport canal-sur-interféreurs (CIR) au niveau d'une station mobile comporte une comparaison entre le niveau de réception (RXLEV_DL) par la station mobile (3) d'un signal émis par la station de base (1) et les niveaux de réception (RXLEV_NCELL(n)), par la même station mobile, de signaux émis sur des fréquences de balise par les stations de base d'un ensemble de cellules voisines.

**7.** Procédé selon la revendication 6, dans lequel ladite grandeur (CIR) est le rapport entre le niveau de réception (RXLEV_DL) dudit signal émis par la station de base (1) et une somme des niveaux de réception (RXLEV_NCELL (n)) des signaux émis sur les fréquences de balise par les stations de base des cellules voisines.

**8.** Procédé selon la revendication 7, dans lequel ladite somme est pondérée en fonction des couleurs des cellules voisines dans des motifs de réutilisation des fréquences dans le réseau.

**9.** Procédé selon l'une quelconque des revendications 1 à 4, dans lequel lesdites mesures effectuées sur des canaux radio dans la cellule comprennent des mesures d'un retard de réception, par la station de base (1), de signaux émis par des stations mobiles (3).

**10.** Procédé selon l'une quelconque des revendications précédentes, dans lequel la statistique des valeurs obtenues de ladite grandeur (RXLEV, RXQUAL, DISTANCE, CIR) porte sur des premières mesures obtenues sur un canal de signalisation dédié (SDCCH) pour chaque station mobile (3) accédant spontanément à la cellule.

**11.** Procédé selon l'une quelconque des revendications précédentes, dans lequel ladite grandeur est comparée à un paramètre associé ($S_{PC}$) dans une procédure de contrôle de la puissance émise sur des canaux radio alloués à des communications entre la station de base (1) et des stations mobiles (3).

**12.** Procédé selon la revendication 11, dans lequel la procédure de contrôle de puissance est telle que seules les stations mobiles pour lesquelles la valeur obtenue de ladite grandeur est supérieure à la valeur sélectionnée d'un premier paramètre associé ($S_{PC}$) peuvent faire l'objet d'une limitation de puissance, et dans lequel ladite fraction déterminée est de 10 à 20 % pour l'adaptation du premier paramètre ($S_{PC}$).

**13.** Procédé selon la revendication 12, dans lequel ladite grandeur est en outre comparée à un second paramètre associé ($S_{HO}$) dans une procédure de transfert automatique intercellulaire de communication, dans lequel la procédure de transfert automatique est telle que les stations mobiles (3) pour lesquelles la valeur obtenue de ladite grandeur est inférieure à la valeur sélectionnée du second paramètre associé font l'objet d'un transfert intercellulaire, et dans lequel ladite fraction déterminée est plus faible pour l'adaptation du second paramètre ($S_{HO}$) que pour l'adaptation du premier paramètre ($S_{PC}$).

**14.** Procédé selon l'une quelconque des revendications précédentes, dans lequel ladite grandeur est comparée à au moins un paramètre associé ($S_1$-$S_3$, $S_{TS}$) dans une procédure de choix des canaux radio alloués à des communications entre la station de base et des stations mobiles.

**15.** Procédé selon la revendication 14, dans lequel la station de base comporte un nombre M d'unités d'émission/réception (TRX1-TRX4) dont l'une émet sur une fréquence de balise, et dans lequel la procédure de choix des canaux radio alloue préférentiellement des canaux sur la fréquence de balise aux stations mobiles (3) pour lesquelles les valeurs obtenues de ladite grandeur sont inférieures à un paramètre associé ($S_1$) dont l'adaptation utilise une fraction déterminée de la forme 100/M %.

**16.** Procédé selon la revendication 14, dans lequel la station de base comporte un nombre M d'unités d'émission/réception (TRX1-TRX4), et dans lequel la procédure de choix des canaux radio distribue les canaux alloués aux stations mobiles (3) en fonction de comparaisons entre les valeurs obtenues de ladite grandeur pour lesdites stations mobiles et M-1 paramètres associés ($S_1$-$S_3$) dont l'adaptation utilise des fractions déterminées respectives de la forme $100 \times m/M$ % pour $1 \leq m \leq M-1$.

**17.** Procédé selon l'une quelconque des revendications précédentes, dans lequel ladite grandeur est comparée à un paramètre associé ($S_{HO}$) dans une procédure de transfert automatique de communication, intercellulaire ou intracellulaire.

**18.** Procédé selon l'une quelconque des revendications précédentes, dans lequel la station de base (1) comporte plusieurs unités d'émission/réception (TRX1-TRX4), et dans lequel la statistique des valeurs obtenues de ladite grandeur est tenue séparément pour chacune des unités d'émission/réception, afin de sélectionner indépendamment les valeurs du paramètre associé ($S_{TS}$) pour les différentes unités d'émission/réception, une partie au moins de la procédure de gestion de ressources radio étant exécutée pour chacune des unités d'émission/réception.

**19.** Equipement de contrôle d'au moins une station de base (1) d'un réseau cellulaire de radiocommunication, comprenant des moyens (6) d'exécution de procédures de gestion de ressources radio allouées à des communications entre la station de base et des stations mobiles (3) dans une cellule desservie par cette station de base, **caractérisé par** des moyens (10,11) de sélection, conformément à un procédé de sélection selon l'une quelconque des revendications précédentes, de la valeur d'au moins un paramètre ($S_{PC}$,$S_{HO}$,$S_1$,$S_2$,$S_3$,$S_{TS}$) utilisé dans au moins une desdites procédures dans laquelle des valeurs d'une grandeur (RXLEV, RXQUAL, DISTANCE, CIR) obtenues à partir de mesures effectuées dans la cellule sur des canaux radio entre la station de base et les stations mobiles sont comparées audit paramètre, les moyens de sélection (10,11) étant agencés pour tenir une statistique des valeurs obtenues de ladite grandeur, et pour adapter la valeur dudit paramètre de façon que, d'après la statistique, une fraction déterminée des valeurs obtenues de ladite grandeur soit supérieure à la valeur du paramètre associé.

**Patentansprüche**

**1.** Verfahren zur Auswahl des Werts wenigstens eines Steuerparameters für Funkquellen ($S_{PC}$, $S_{HO}$, $S_1$, $S_2$, $S_3$, $S_{TS}$), der von Geräten (4) zur Steuerung von Basisstationen eines zellularen Funkkommunikationsnetzes verwendet wird, wobei man für jede Basisstation (1), die Mobilstationen (3) in einer Zelle versorgt, gemäß Messungen, die an Funkkanälen in der Zelle durchgeführt werden, Werte wenigstens einer Größe (RXLEV, RXQUAL, DISTANCE, CIR) erhält, wobei die Größe mit wenigstens einem zugeordneten Parameter in einem Verfahren zur Steuerung der den Mobilstationen zugewiesenen Funkquellen verglichen wird,
**dadurch gekennzeichnet, dass** man eine Statistik der erhaltenen Werte der Größe erstellt, und dass man den Wert des zugeordneten Parameters für die Zelle derart anpasst, dass gemäß der Statistik ein vorbestimmter Anteil der erhaltenen Werte der Größe größer als der Wert des zugeordneten Parameters ist.

**2.** Verfahren nach Anspruch 1,
bei dem die Messungen an den Funkkanälen in der Zelle Messungen des Empfangspegels (RXLEV) von Funksignalen umfassen, die in wenigstens einer Richtung zwischen der Basisstation (1) und Mobilstationen (3) übertragen worden sind.

**3.** Verfahren nach einem der vorhergehenden Ansprüche,
bei dem die an den Funkkanälen in der Zelle durchgeführten Messungen Messungen der Empfangsqualität (RXQUAL) von Funksignalen umfassen, die in wenigstens einer Richtung zwischen der Basisstation (1) und Mobilstationen (3) übertragen worden sind.

**4.** Verfahren nach einem der vorhergehenden Ansprüche,
bei dem das Erhalten der Größe eine Abschätzung eines Kanal/Störer-Verhältnisses (CIR) im Bereich der Basisstation (1) oder jeder Mobilstation (3) umfasst.

**5.** Verfahren nach einem der vorhergehenden Ansprüche,
bei dem die Messungen durch die Mobilstationen (3) durchgeführt werden.

**6.** Verfahren nach den Ansprüchen 4 und 5,
bei dem die Abschätzung eines Kanal/Störer-Verhältnisses (CIR) im Bereich einer Mobilstation einen Vergleich zwischen dem Empfangspegel (RXLEV_DL) eines von der Basisstation (1) ausgesandten Signals bei der Mobilstation (3) und den Empfangspegeln (RXLEV_NCELL(n)) von Signalen bei der gleichen Mobilstation umfasst, die von den Basisstationen einer Gruppe von Nachbarzellen auf Kennzeichnungsfrequenzen ausgesandt sind.

**7.** Verfahren nach Anspruch 6,
bei dem die Größe (CIR) das Verhältnis ist zwischen dem Empfangspegel (RXLEV_DL) des von der Basisstation (1) ausgesandten Signals und einer Summe von Empfangspegeln (RXLEV_NCELL(n)) der Signale, die auf den Kennzeichnungsfrequenzen von den Basisstationen der Nachbarzellen ausgesandt sind.

**8.** Verfahren nach Anspruch 7,
bei dem die Summe als Funktion der Farben der Nachbarzellen aus Motiven der Wiederverwendung der Frequenzen im Netz gewichtet wird.

**9.** Verfahren nach einem der Ansprüche 1 bis 4,
bei dem die an den Funkkanälen in der Zelle durchgeführten Messungen Messungen der Verzögerung des Empfangs von durch die Mobilstationen (3) ausgesandten Signalen durch die Basisstation (1) umfassen.

**10.** Verfahren nach einem der vorhergehenden Ansprüche,
bei dem die Statistik der erhaltenen Werte der Größe (RXLEV, RXQUAL, DISTANCE, CIR) auf ersten Messungen beruht, die auf einem speziellen Signalkanal (SDCCH) für jede Mobilstation (3) erhalten sind, die spontan in die Zelle eintritt.

**11.** Verfahren nach einem der vorhergehenden Ansprüche,
bei dem die Größe mit einem zugeordneten Parameter ($S_{PC}$) in einem Verfahren zur Steuerung der Leistung verglichen wird, die auf Funkkanälen ausgesandt wird, die Kommunikationen zwischen der Basisstation (1) und Mobilstationen (3) zugewiesen ist.

**12.** Verfahren nach Anspruch 11,
bei dem das Verfahren zur Leistungssteuerung derart erfolgt, dass nur diejenigen Mobilstationen, für die der erhaltene Wert der Größe größer als der ausgewählte Wert eines ersten zugeordneten Parameters ($S_{PC}$) ist, Gegenstand einer Leistungsbegrenzung sein können, und bei dem der vorbestimmte Anteil zwischen 10 und 20% für die Anpassung des ersten Parameters ($S_{PC}$) liegt.

**13.** Verfahren nach Anspruch 12,
bei dem die Größe ferner mit einem zweiten zugeordneten Parameter ($S_{HO}$) in einem Verfahren zum automatischen interzellulären Kommunikationstransfer verglichen wird, wobei das automatische Transferverfahren derart erfolgt, dass die Mobilstationen (3), für die der erhaltene Wert der Größe kleiner als der ausgewählte Wert des zweiten zugeordneten Parameters ist, Gegenstand eines interzellulären Transfers sind, und wobei der vorbestimmte Anteil für die Anpassung des zweiten Parameters ($S_{HO}$) kleiner als für die Anpassung des ersten Parameters ($S_{PC}$) ist.

**14.** Verfahren nach einem der vorhergehenden Ansprüche,
bei dem die Größe mit wenigstens einem zugeordneten Parameter ($S_1$-$S_3$, $S_{TS}$) in einem Verfahren zur Auswahl der Funkkanäle verglichen wird, die den Kommunikationen zwischen der Basisstation und den Mobilstationen zugewiesen sind.

**15.** Verfahren nach Anspruch 14,
bei dem die Basisstation eine Anzahl M von Sende/Empfangseinheiten (TRX1-TRX4) umfasst, von denen eine auf einer Kennzeichnungsfrequenz sendet, und bei dem das Verfahren zur Auswahl der Funkkanäle vorzugsweise Kanäle auf der Kennzeichnungsfrequenz den Mobilstationen (3) zuweist, für die die erhaltenen Werte der Größe kleiner als ein zugeordneter Parameter ($S_1$) sind, dessen Anpassung einen vorbestimmten Anteil der Form 100/M% benutzt.

**16.** Verfahren nach Anspruch 14,
bei dem die Basisstation eine Anzahl M von Sende/Empfangseinheiten (TRX1-TRX4) umfasst, und bei dem das Verfahren zur Auswahl der Funkkanäle die den Mobilstationen (3) zugewiesenen Kanäle verteilt als Funktion von Vergleichen zwischen den erhaltenen Werten der Größe für die Mobilstationen und M-1 zugeordneten Parametern ($S_1$-$S_3$), deren Anpassung jeweilige vorbestimmte Anteile der Form 100xm/M% für $1 \leq m \leq$ M-1 benutzt.

**17.** Verfahren nach einem der vorhergehenden Ansprüche,
bei dem die Größe mit einem zugeordneten Parameter ($S_{HO}$) in einem interzellulären oder intrazellulären automatischen Kommunikationstransferverfahren verglichen wird.

**18.** Verfahren nach einem der vorhergehenden Ansprüche,
bei dem die Basisstation (1) mehrere Sende/Empfangseinheiten (TRX1-TRX4) umfasst, und bei dem die Statistik der erhaltenen Werte der Größe getrennt für jede der Sende/Empfangseinheiten erstellt wird, um unabhängig die Werte des zugeordneten Parameters ($S_{TS}$) für die verschiedenen Sende/Empfangseinheiten auszuwählen, wobei wenigstens ein Teil des Verfahrens zur Steuerung der Funkquellen für jede der Sende/Empfangseinheiten durchgeführt wird.

19. Vorrichtung zur Steuerung wenigstens einer Basisstation (1) eines zellulären Funkkommunikationsnetzes, umfassend Mittel (6) zur Durchführung von Verfahren zur Steuerung von Funkquellen, die Kommunikationen zwischen der Basisstation und Mobilstationen (3) in einer von dieser Basisstation versorgten Zelle zugewiesen sind, **gekennzeichnet durch** Mittel (10, 11) zur Auswahl gemäß einem Auswahlverfahren nach einem der vorhergehenden Ansprüche des Werts wenigstens eines Parameters ($S_{PC}$, $S_{HO}$, $S_1$, $S_2$, $S_3$, $S_{TS}$), der in wenigstens einem der Verfahren verwendet wird, bei dem Werte einer Größe (RXLEV, RXQUAL, DISTANCE, CIR) mit dem Parameter verglichen werden, die erhalten sind ausgehend von Messungen, die durchgeführt sind in der Zelle an Funkkanälen zwischen der Basisstation und den Mobilstationen, wobei die Mittel zur Auswahl (10, 11) dazu ausgelegt sind, dass sie eine Statistik der erhaltenen Werte der Größe erstellen, und dass sie den Wert des Parameters derart anpassen, dass gemäß der Statistik ein vorbestimmter Anteil der erhaltenen Werte der Größe größer als der Wert des zugeordneten Parameters ist.

## Claims

1. A method of selecting the value of at least one radio resource management parameter ($S_{PC}$, $S_{HO}$, $S_1$, $S_2$, $S_3$, $S_{TS}$) employed by base station control units (4) of a cellular radio communications network, wherein, for each base station (1) serving mobile stations (3) in a cell, values are obtained of at least one quantity (RXLEV, RXQUAL, DISTANCE, CIR) based on measurements made on radio channels in the cell, said quantity being compared to at least one associated parameter in a procedure for managing the radio resources allocated to the mobile stations, **characterised in that** a statistic is maintained of the values obtained for said quantity, and **in that** the value of said associated parameter is adapted for the cell in such a way that, according to the statistic, a determined fraction of the values obtained of said quantity are greater than the value of the associated parameter.

2. A method according to Claim 1, wherein said measurements on radio channels in the cell comprise measurements of the reception level (RXLEV) of radio signals transmitted in at least one direction between the base station (1) and mobile stations (3).

3. A method according to any one of the preceding claims, wherein said measurements made on radio channels in the cell comprise quality measurements (RXQUAL) of the reception of radio signals transmitted in at least one direction between the base station (1) and mobile stations (3).

4. A method according to any one of the preceding claims, wherein the obtaining of said quantity comprises estimating a channel-to-interferer ratio (CIR) at the base station (1) or at each mobile station (3).

5. A method according to any one of the preceding claims, wherein said measurements are made by the mobile stations (3).

6. A method according to Claims 4 and 5, wherein the estimation of a channel-to-interferer ratio (CIR) at a mobile station comprises a comparison between the reception level (RXLEV DL), by the mobile station (3), of a signal transmitted by the base station (1) and the reception levels (RXLEV NCELL(n)), by the same mobile station, of signals transmitted on beacon frequencies by the base stations of a set of adjacent cells.

7. A method according to Claim 6, wherein said quantity (CIR) is the ratio between the level of reception (RXLEV DL) of said signal transmitted by the base station (1) and a sum of the reception levels (RXLEV NCELL(n)) of the signals transmitted on the beacon frequencies by the base stations of the adjacent cells.

8. A method according to Claim 7, wherein said sum is weighted as a function of colours of the adjacent cells in frequency reuse patterns of the network.

9. A method according to any one of Claims 1 to 4, wherein said measurements made on radio channels in the cell comprise measurements of a reception delay, by the base station (1), of signals transmitted by mobile stations (3).

10. A method according to any one of the preceding claims, wherein the statistic of the values obtained of said quantity (RXLEV, RXQUAL, DISTANCE, CIR) is based on first measurements obtained on a dedicated signalling channel (SDCCH) for each mobile station (3) spontaneously accessing the cell.

**11.** A method according to any one of the preceding claims, wherein said quantity is compared with an associated parameter ($S_{PC}$) in a control procedure of the power transmitted on radio channels allocated to communications between the base station (1) and mobile stations (3).

**12.** A method according to Claim 11, wherein the power control procedure is such that only the mobile stations for which the value obtained of said quantity is greater than the selected value of a first associated parameter ($S_{PC}$) can be subjected to power limitation, and wherein said determined fraction is of 10 to 20 % for the adaptation of the first parameter ($S_{PC}$).

**13.** A method according to Claim 12, wherein said quantity is further compared to a second associated parameter ($S_{HO}$) in an inter-cell handover procedure, wherein the handover procedure is such that the mobile stations (3) for which the value obtained of said quantity is lower than the selected value of the second associated parameter are subjected to inter-cell handover, and wherein said determined fraction is lower for the adaptation of the second parameter ($S_{HO}$) than for the adaptation of the first parameter ($S_{PC}$).

**14.** A method according to any one of the preceding claims, wherein said quantity is compared to at least one associated parameter ($S_1$-$S_3$, $S_{TS}$) in a selection procedure for radio channels allocated to communications between the base station and the mobile stations.

**15.** A method according to Claim 14, wherein the base station comprises a number M of transceiver units (TRX1-TRX4), one of which transmits on a beacon frequency, and wherein the radio channel selection procedure preferentially allocates channels on the beacon frequency to the mobile stations (3) for which the values obtained for said quantity are lower than an associated parameter ($S_1$), the adaptation of which makes use of a determined fraction of the form 100/M %.

**16.** A method according to Claim 14, wherein the base station comprises a number M of transceiver units (TRX1-TRX4), and wherein the radio channel selection procedure distributes the channels allocated to the mobile stations (3) based on comparisons between the values obtained of said quantity for said mobile stations and M-1 associated parameters ($S_1$-$S_3$), the adaptation of which makes use of the respective determined fractions of the form $100 \times m/M$ % for $1 \leq m \leq M$-1.

**17.** A method according to any one of the preceding claims, wherein said quantity is compared to an associated parameter ($S_{HO}$) in an inter-cell or intra-cell handover procedure.

**18.** A method according to any one of the preceding claims, wherein the base station (1) comprises a plurality of transceiver units (TRX1-TRX4), and wherein the statistic for the values obtained for said quantity is maintained separately for each one of the transceiver units, in order to select independently the values of the associated parameter ($S_{TS}$) for the different transceiver units, at least part of the radio resource management procedure being carried out for each one of the transceiver units.

**19.** A control unit for at least one base station (1) of a cellular radio communications network, comprising means (6) for performing management procedures of radio resources allocated to communications between the base station and mobile stations (3) in a cell served by said base station, **characterised by** means (10,11) for selecting, in accordance with a selection method according to any one of the preceding claims, the value of at least one parameter ($S_{PC}$,$S_{HO}$,$S_1$,$S_2$,$S_3$,$S_{TS}$) used in at least one of said procedures in which values of a quantity (RXLEV, RXQUAL, DISTANCE, CIR) obtained from measurements made in the cell on radio channels between the base station and the mobile stations are compared with said parameter, the selection means (10,11) being arranged to maintain a statistic of the values obtained of said quantity, and to adapt the value of said parameter in such a way that, based on the statistic, a determined fraction of the values obtained of said quantity are greater than the value of the associated parameter.

FIG.1.

FIG.2.

FIG.4.

FIG.3.

FIG.5.

FIG.6.

FIG.7.

17